# EUROPÄISCHE PATENTANMELDUNG

(11) **EP 0 796 760 A2**
(43) Veröffentlichungstag der Anmeldung: **24.09.1997**
(21) Anmeldenummer: 97104975.4
(22) Anmeldetag: 24.03.1997
(51) Int. Cl.: B60N 2/48

(54) **Nackenstütze**

(30) Priorität: 22.03.1996 DE 19611272
(71) Anmelder: ADCON-Verwaltungsgesellschaft mbH, 95346 Stadtsteinach (DE)
(72) Erfinder: Reithmeier, Harald, 95346 Stadtsteinach (DE)
(74) Vertreter: Schlagwein, Udo, Dipl.-Ing.

(57) **Zusammenfassung**

Eine Nackenstütze (1), welche einen den Hals hufeisenförmig umschließenden Stützbereich hat, ist aus zwei Spielfiguren (2, 3) gebildet. Lösbare Verbindungsmittel (6) halten die Spielfiguren (2, 3) zusammen. Dadurch ist es möglich, die beiden Spielfiguren (2, 3) voneinander zu trennen und als vollwertige Spielzeuge zu benutzen.

## Beschreibung

Die Erfindung betrifft eine Nackenstütze, welche einen den Hals hufeisenförmig umschließenden Stützbereich hat und bei der zumindest ein freies Ende zusammen mit einem Teil des Stützbereiches eine Spielfigur bildet.

Nackenstützen der vorstehenden Art werden insbesondere von Kindern benutzt, um im Auto in sitzender Haltung ein bequemes Schlafen zu ermöglichen. Hierzu wird die Nackenstütze von der Nackenseite her zwischen Kopf und Schulter auf den Hals geschoben, so daß der Kopf abgestützt ist und nicht zur Seite oder nach hinten kippen und dadurch in eine unbequeme Lage kommen kann. Bei Nackenstützen für Kinder bildet man die freien Enden der Nackenstütze oftmals als Teil einer Spielfigur aus. Besonders gut läßt sich die Funktion der Nackenstütze mit der einer Spielfigur kombinieren, wenn man ein Ende als Kopf einer Schlange und das andere Ende als ihren Schwanz ausbildet. Häufig gestaltet man die beiden Enden auch als Kopf einer Puppe, Maus, eines Bären oder anderen Tieres.

Nachteilig bei den bekannten Nackenstützen ist es, daß sie trotz der Gestaltung ihrer Enden als Spielfigur kaum zum Spielen geeignet sind, weil sie funktionsbedingt stets die Form eines Hufeisens haben und deshalb nur bei der Ausbildung als Schlange mit dem entsprechenden Tier vergleichbar aussehen.

Der Erfindung liegt das Problem zugrunde, eine Nackenstütze der eingangs genannten Art so zu gestalten, daß sie besonders gut zum Spielen geeignet ist.

Dieses Problem wird erfindungsgemäß dadurch gelöst, daß die Spielfigur mit dem Teil des Stützbereiches als separate Einheit ausgebildet ist und Verbindungsmittel zum lösbaren Verbinden mit dem übrigen Teil der Nackenstütze aufweist.

Durch diese Gestaltung wird es möglich, durch Öffnen der Verbindungsmittel die Spielfigur von der Nackenstütze abzutrennen und für sich allein als Spielzeug zu benutzen. Deshalb kann man die Spielfigur weitgehend ohne Rücksicht auf die funktionellen Erfordernisse einer Nackenstütze gestalten, so daß sie vom Aussehen her einer üblichen Stoffpuppe oder einem Stoff- oder Plüschtier entspricht. Dadurch eignet sich die Spielfigur uneingeschränkt zum Spielen, so daß die Anschaffung einer Puppe oder eines Stofftieres zu Spielzwecken eingespart werden kann. Hinzu kommt, daß Kinder in einem Autositz lieber sitzen, wenn zur Abstützung des Kopfes eine ihnen vertraute Puppe oder eine andere vertraute Spielfigur benutzt wird. Die an der Spielfigur und dem übrigen Teil der Nackenstütze anzubringenden Verbindungsmittel können beliebig gestaltet sein. Es kann sich dabei beispielsweise um Druckknöpfe, Reißverschlüsse, um eine Verbindung mit Knöpfen und Knopflöchern , einen Textilhaftverschluß, eine Schnallenverbindung oder auch eine Verbindung mit Haken oder Bändern handeln.

Statt eine Nackenstütze mit einer lösbaren Spielfigur zu versehen, kann man gemäß einer vorteilhaften Weiterbildung der Erfindung auch vorsehen, daß beide Enden der Nackenstütze als Spielfigur ausgebildet und lösbar miteinander verbunden sind. Dann stehen einem Kind zwei vollwertige Spielfiguren zur Verfügung, wenn die lösbaren Verbindungen geöffnet werden.

Die Spielfiguren können unmittelbar miteinander verbunden oder aber, es kann gemäß einer besonderen Ausgestaltung der Erfindung zum Verbinden der Spielfiguren miteinander zwischen beiden Spielfiguren ein Kupplungsstück vorgesehen sein.

Auch wenn man auf ein solches Kupplungstück verzichten will, braucht die Gestaltung einer Spielfigur gegenüber dem normalen Aussehen nicht oder nur unwesentlich verändert zu werden, wenn gemäß einer anderen Weiterbildung der Erfindung die Spielfiguren jeweils Arme und/oder Beine aufweisen und die Verbindungsmittel an jeweils einem Arm oder Bein vorgesehen sind.

Vorteilhaft ist es auch, wenn die beiden Spielfiguren unterschiedlich ausgebildet sind. Das ist besonders dann reizvoll, wenn man zwei sich ergänzende Spielfiguren vorsieht, zum Beispiel Vater und Mutter oder Puppe und Teddybär oder Cowboy und Indianer.

Man kann eine Spielfigur nahezu ohne Rücksicht auf die Funktion als Nackenstütze gestalten, wenn die andere Spielfigur sich in Gebrauchslage als Nackenstütze von einer Seite des Halses bis über den Nacken hinaus erstreckt.

Zur Verbesserung der Stützfunktion kann man vorsehen, daß die die Stützfunktion ausübende Spielfigur im gegen den hinteren Halsbereich anliegenden Bereich nach orthopädischen Gesichtspunkten gestaltet ist.

Die Erfindung läßt zahlreiche Ausführungsformen zu. Eine davon ist zur Verdeutlichung ihres Grundprinzips in der Zeichnung dargestellt und wird nachfolgend beschrieben. Diese zeigt in
- Fig.1: eine Draufsicht auf eine Nackenstütze nach der Erfindung,
- Fig.2: eine gegenüber Fig.1 im Maßstab vergrößerte Ansicht zweier Hände zweier die Nackenstütze bildender Stoffpuppen.

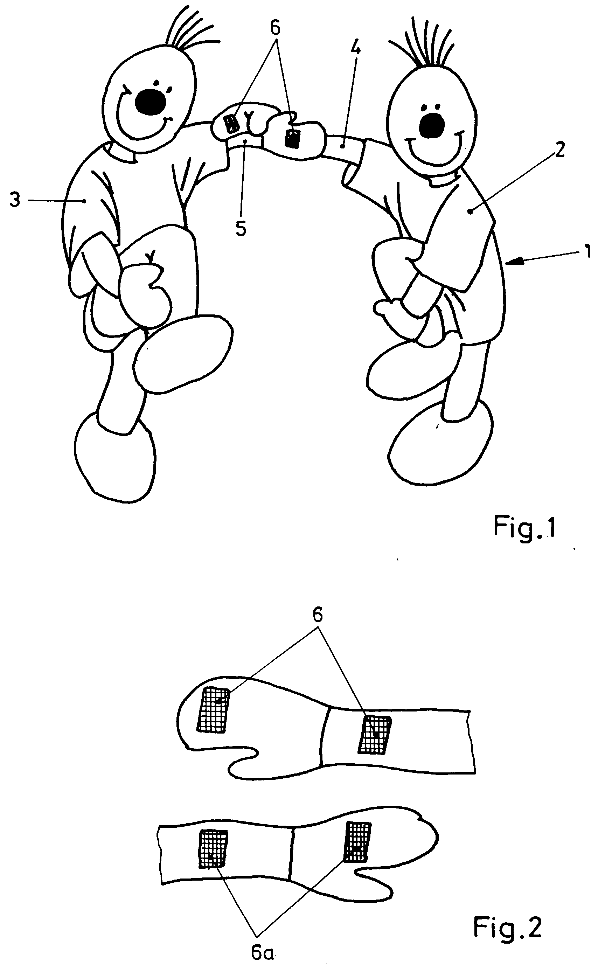

Die Figur 1 zeigt eine Nackenstütze 1, welche aus zwei Spielfiguren 2, 3 besteht. Diese Spielfiguren 2, 3 haben zwei ausgestreckte Arme 4, 5, welche durch Verbindungsmittel 6 miteinander verbunden sind und dadurch einen Stützbereich der Nackenstütze 1 bilden.

Die Figur 2 verdeutlicht, daß es sich bei diesem Ausführungsbeispiel um einen Textilhaftverschluß handelt. Es ist jedoch auch möglich, sich anderer Verbindungsmittel, insbesondere eines Reißverschlusses, Bänder oder Knöpfe, zu bedienen.

Statt zwei gleiche Spielfiguren 2, 3 vorzusehen, kann man auch nur eine einzige Spielfigur verwenden und diese mit einem wulstförmigen Teil verbinden, welcher einen Viertelkreisbogen bildet. Möglich ist es auch, zwei verschiedene Spielfiguren miteinander zu verbinden und dabei nur bei einer Spielfigur zum Beispiel einen Arm so ausbilden, daß er zugleich den rückwärtigen Bereich der Nackenstütze bildet.

## Patentansprüche

1. Nackenstütze, welche einen den Hals hufeisenförmig umschließenden Stützbereich hat und bei der zumindest ein freies Ende zusammen mit einem Teil des Stützbereiches eine Spielfigur bildet, **dadurch gekennzeichnet**, daß die Spielfigur (2, 3) mit dem Teil des Stützbereiches als separate Einheit ausgebildet ist und Verbindungsmittel (6) zum lösbaren Verbinden mit dem übrigen Teil der Nackenstütze (1) aufweist.

2. Nackenstütze nach Anspruch 1, **dadurch gekennzeichnet**, daß beide Enden der Nackenstütze (1) als Spielfigur (2, 3) ausgebildet und lösbar miteinander verbunden sind.

3. Nackenstütze nach Anspruch 2, **dadurch gekennzeichnet**, daß zum Verbinden der Spielfiguren (2, 3) miteinander zwischen beiden Spielfiguren (2, 3) ein Kupplungsstück vorgesehen ist.

4. Nackenstütze nach Anspruch 2, **dadurch gekennzeichnet**, daß die Spielfiguren (2, 3) jeweils Arme (4, 5) und/oder Beine aufweisen und die Verbindungsmittel (6) an jeweils einem Arm (4, 5) oder Bein vorgesehen sind.

5. Nackenstütze nach zumindest einem der vorangehenden Ansprüche, **dadurch gekennzeichnet**, daß die beiden Spielfiguren (2, 3) unterschiedlich ausgebildet sind.

6. Nackenstütze nach zumindest einem der vorangehenden Ansprüche, **dadurch gekennzeichnet**, daß eine Spielfigur (2) sich in Gebrauchslage als Nackenstütze (1) von einer Seite des Halses bis über den Nacken hinaus erstreckt.

7. Nackenstütze nach Anspruch 6, **dadurch gekennzeichnet**, daß die die Stützfunktion ausübende Spielfigur (2, 3) im gegen den hinteren Halsbereich anliegenden Bereich nach orthopädischen Gesichtspunkten gestaltet ist.
